# EUROPÄISCHE PATENTANMELDUNG

(11) **EP 4 438 401 A1**
(43) Veröffentlichungstag der Anmeldung: **02.10.2024**
(21) Anmeldenummer: 24163121.7
(22) Anmeldetag: 13.03.2024
(51) Int. Cl.: B60N 2/14, B60N 2/32, B60N 2/34, B60N 2/60, B60N 2/90, B60P 3/36

(54) **FREIZEITFAHRZEUG, INSBESONDERE WOHNMOBIL, MIT ZUMINDEST EINER VERÄNDERBAREN, INSBESONDERE DREHBAREN, SITZEINRICHTUNG IM FRONTBEREICH**

(30) Priorität: 22.03.2023 DE 102023107255
(71) Anmelder: Hymer GmbH & Co. KG, 88339 Bad Waldsee (DE)
(72) Erfinder: Fiedler, Andreas, 89231 Neu-Ulm (DE); Ziegler, Stefan, 99091 Erfurt (DE); Menailiuk, Sylvia, 88250 Weingarten (DE)
(74) Vertreter: Müller Schupfner & Partner Patent- und Rechtsanwaltspartnerschaft mbB (Muc)

(57) **Zusammenfassung**

Freizeitfahrzeug (1), insbesondere Wohnmobil, mit zumindest einer Sitzeinrichtung (2, 3) im Frontbereich, die in einer Fahrstellung für eine Fahrt des Freizeitfahrzeugs und in zumindest einer von der Fahrstellung verschiedenen Aufenthaltsstellung anordenbar ist. Vorgeschlagen wird, dass zumindest eine Polstererweiterung (4) vorgesehen ist und dass die Polstererweiterung (4) so ausgestaltet ist, dass diese sich in die zumindest eine Sitzeinrichtung (2, 3) zumindest in der Aufenthaltsstellung einfügt.

## Beschreibung

Die Erfindung betrifft ein Freizeitfahrzeug, insbesondere Wohnmobil, mit zumindest einer veränderbaren Sitzeinrichtung im Frontbereich. Speziell betrifft die Erfindung das Gebiet der Freizeitfahrzeuge, bei denen der Fahrersitz und der Beifahrersitz für einen Aufenthalt auf beispielsweise einem Campingplatz jeweils um zumindest 180° gedreht werden können, um eine Nutzung zu Wohnzwecken zu ermöglichen.

Aus der EP 0 844 135 A2 ist ein Wohnmobil bekannt. Vordersitze des Wohnmobils sind drehbar ausgebildet, so dass die Sitzposition nicht nur nach vorne zur Windschutzscheibe gerichtet ist, sondern auch nach rückwärts und teilweise sogar schräg nach hinten weisen kann. Außerdem ist eine Sitzgruppe vorhanden, die aus einem Einzelsitz und einer Sitzbank besteht. Im Raum zwischen all diesen Sitzen ist ein Tisch am Boden befestigt, der aus einem Einsäulen-Gestell und einer exzentrisch darauf drehbar gelagerten Tischplatte besteht. Die drehbare Tischplatte soll dabei in unterschiedlichen Drehpositionen arretierbar sein. Ferner ist ein Hubbett von einer seitlich oder nach oben weggeschwenkten Nichtgebrauchsstellung über die Vordersitze schwenkbar.

Das aus der EP 0 844 135 A2 bekannte Wohnmobil hat den Nachteil, dass der Platzbedarf für die Anordnung aus den Sitzen und dem Tisch im Grundriss betrachtet groß ist. Ferner benötigt das über einem Vordersitz angeordnete Hubbett als zusätzliche Einrichtung Stauplatz, wenn die Anordnung aus den Sitzen genutzt werden soll. Ein weiterer Nachteil besteht in den mit der Anordnung verbundenen Einschränkungen auf den Grundriss, insbesondere auf die Anordnung einer Seitentür des Wohnmobil.

Aufgabe der Erfindung ist es, ein Freizeitfahrzeug, insbesondere ein Wohnmobil, anzugeben, das einen verbesserten Aufbau aufweist und eine verbesserte Funktionsweise ermöglicht.

Die Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird durch ein Freizeitfahrzeug, insbesondere ein Wohnmobil, mit zumindest einer Sitzeinrichtung im Frontbereich, die in einer Fahrstellung für eine Fahrt des Freizeitfahrzeugs und in zumindest einer von der Fahrstellung verschiedenen Aufenthaltsstellung anordenbar ist, gelöst, wobei zumindest eine Polstererweiterung vorgesehen ist und wobei die Polstererweiterung so ausgestaltet ist, dass diese sich in die zumindest eine Sitzeinrichtung zumindest in der Aufenthaltsstellung einfügt.

Hierbei ist es möglich, dass die Sitzeinrichtung in mehrere voneinander verschiedene Aufenthaltsstellungen gebracht werden kann.

Vorteilhaft ist es, dass zumindest eine Polstererweiterung als Sitzflächenauflage und/oder Lehnenflächenauflage ausgestaltet ist, die sich in eine Sitzfläche beziehungsweise eine Lehnenfläche der Sitzeinrichtung einfügt. Dadurch kann die Geometrie der sich ergebenen Sitzfläche beziehungsweise Lehnenfläche an den jeweiligen Zweck in der Aufenthaltsstellung angepasst werden. Beispielsweise kann die Sitzfläche beziehungsweise die Lehnenfläche in Bezug auf die Sicherheit und die Ergonomie während einer Fahrt ausgestaltet sein. Insbesondere können Wangen an der Sitzfläche beziehungsweise der Lehnenfläche vorgesehen sein, um während der Fahrt einen Seitenhalt und eine vorgegebene Sitzposition in Bezug auf Sicherheitssysteme zu gewährleisten. Solche Wangen stören dann aber die Nutzung, wenn hierfür beispielsweise eine möglichst ebene Fläche gewünscht ist.

Vorteilhaft ist es, dass zumindest eine Polstererweiterung zumindest teilweise als Überzug ausgestaltet ist, der zumindest teilweise über einer Sitzfläche und/oder einer Lehnenfläche der Sitzeinrichtung anordenbar ist. Dadurch ist ein zuverlässiger Sitz möglich. Es kann eine einfache Montage und Demontage durch den Benutzer erfolgen.

Vorteilhaft ist es, dass zumindest eine Polstererweiterung als Kissen ausgestaltet ist, das sich an eine Lehne der Sitzeinrichtung fügt. Beispielsweise kann hierdurch der Komfort einer Couch realisiert werden, indem das Kissen als Arm- und Kopfauflage dienen kann. Vorteilhaft ist es speziell, das zumindest eine Polstererweiterung als seitliches Kissen ausgebildet ist, dass zumindest näherungsweise neben einer Sitzfläche der Sitzeinrichtung vorgesehen ist.

Vorteilhaft ist es, dass zumindest eine Polstererweiterung als Sitzflächenvergrößerung ausgebildet ist, die eine Sitzfläche zumindest einer Sitzeinrichtung vergrößert. Dadurch kann der Komfort verbessert werden. Es werden größere Variationen der Sitzposition ermöglicht. Gegebenenfalls kann eine zusätzliche Person Platz finden. Personen können schräg oder auch nahe beisammen sitzen.

Vorteilhaft ist es, dass die Sitzflächenvergrößerung die Sitzfläche der Sitzeinrichtung zumindest neben der Sitzfläche der Sitzeinrichtung vergrößert. Gegebenenfalls kann zumindest eine weitere Person Platz finden. Gegebenenfalls kann eine Liegemöglichkeit geschaffen werden. Es kann eine Möglichkeit zum Hochlegen der Füße geschaffen werden. Vorteilhaft ist es speziell, dass die Sitzflächenvergrößerung die Sitzfläche der Sitzeinrichtung zumindest vor der Sitzfläche der Sitzeinrichtung vergrößert.

Vorteilhaft ist es, dass zumindest eine Polstererweiterung als Lehnenvergrößerung ausgebildet ist, die die Lehnenfläche der Sitzeinrichtung vergrößert. Vorteilhaft ist es speziell, dass die Lehnenvergrößerung die Lehnenfläche der Sitzeinrichtung neben der Lehnenfläche der Sitzeinrichtung vergrößert. Somit kann die Sitzposition variiert werden. Es kann gegebenenfalls Platz für zumindest eine weitere Person geschaffen werden.

Vorteilhaft ist es, dass eine erste Sitzeinrichtung im Frontbereich, die in einer Fahrstellung für eine Fahrt des Freizeitfahrzeugs und in zumindest einer von der Fahrstellung verschiedenen Aufenthaltsstellung anordenbar ist, und zumindest eine zweite Sitzeinrichtung im Frontbereich, die in einer Fahrstellung für eine Fahrt des Freizeitfahrzeugs und in zumindest einer von der Fahrstellung verschiedenen Aufenthaltsstellung anordenbar ist, vorgesehen sind, dass die erste Sitzeinrichtung und die zweite Sitzeinrichtung so in der Aufenthaltsstellung anordenbar sind, dass eine Sitzfläche der ersten Sitzeinrichtung und eine Sitzfläche der zweiten Sitzeinrichtung mit einem gewissen Abstand nebeneinander angeordnet sind, und dass zwischen der Sitzfläche der ersten Sitzeinrichtung und der Sitzfläche der zweiten Sitzeinrichtung zumindest eine Polstererweiterung anordenbar ist, so dass eine sich über die Sitzfläche der ersten Sitzeinrichtung und die Sitzfläche der zweiten Sitzeinrichtung erstreckende, zumindest im Wesentlichen ununterbrochene Gesamtfläche gebildet ist. Hierdurch sind zusätzliche Möglichkeiten der Nutzung realisierbar. Es kann eine Liegefläche geschaffen werden. Die zumindest im Wesentlichen ununterbrochene Gesamtfläche kann so beschaffen sein, dass ein komfortables Liegen möglich ist, da diesbezüglich zu breite Spalte oder dergleichen verhindert sind. Endsprechendes gilt bei der Realisierung einer Sitzbank, Couch oder dergleichen.

Vorteilhaft ist es, dass die zumindest eine Polstererweiterung so ausgestaltet ist, dass die Gesamtfläche für eine Couch und/oder ein Zusatzbett und/oder ein Kinderbett und/oder als Notbett und/oder als Ablage nutzbar ist. Hierdurch kann auch eine optimierte Nutzung des Grundrisses erfolgen, da eine multifunktionale Nutzung der Sitze möglich ist.

Vorteilhaft ist es, dass zumindest eine Sitzeinrichtung als Fahrersitz ausgebildet ist und/oder dass zumindest eine Sitzeinrichtung als beifahrerseitige Sitzeinrichtung, insbesondere als Beifahrersitz oder als Beifahrersitzgruppe, ausgebildet ist. Die Beifahrersitzgruppe kann insbesondere für zwei Personen eingerichtet sein. Somit können eine größere Anzahl an zusätzlichen Sitzmöglichkeiten geschaffen werden, was die Raumausnutzung deutlich verbessert.

Vorteilhaft ist es, dass zumindest eine Sitzeinrichtung als drehbare Sitzeinrichtung ausgebildet ist und/oder dass zumindest eine Sitzeinrichtung als um zumindest 180° drehbare Sitzeinrichtung ausgebildet ist. Dadurch ist es in besonderes günstiger Weise möglich, eine Couch, eine Sitzbank, eine Liegefläche oder dergleichen zu schaffen, die sich über einen großen Teil, insbesondere zumindest im Wesentlichen, über die Innenraumbreite erstreckt.

Vorteilhaft ist es, dass zumindest eine Polstererweiterung als zumindest teilweise aufblasbare Polstererweiterung ausgebildet ist und/oder dass zumindest eine Polstererweiterung zumindest eine aufblasbare Kammer aufweist und/oder dass zumindest eine Polstererweiterung zumindest eine aufblasbare Kammer mit Innenzugelementen und/oder Abstützelementen aufweist. Hierbei kann ein Kompressor vorgesehen sein, der ein automatisches Aufpumpen und Absaugen ermöglicht. Dadurch wird eine besonderes komfortable Möglichkeit geschaffen, um die Anpassung an den Aufenthalt zu ermöglichen.

Vorteilhaft ist es, dass zumindest eine Polstererweiterung als Konsole ausgebildet. Diese kann beispielsweise ein Lehnenstück zwischen dem Fahrersitz und dem Beifahrersitz beziehungsweise der Beifahrersitzgruppe bilden, das im eingesetzten Zustand vorzugsweise aufgrund seiner Formgebung in seiner Position hält und die Sitzlehnenflächen des Fahrersitzes und des Beifahrersitzes beziehungsweise der Beifahrersitzgruppe insbesondere zumindest im Wesentlichen ununterbrochen überbrückt.

Vorteilhaft ist es, dass zumindest eine Polstererweiterung als faltbare Polstererweiterung ausgebildet ist. Dadurch ist ein kompaktes Verstauen möglich.

Vorteilhaft ist es, dass zumindest eine Polstererweiterung als genähte Polstererweiterung ausgebildet ist. Dadurch kann ein textiles Material zum Einsatz kommen. Gegebenenfalls können hierbei auch Materialkombinationen zum Einsatz kommen.

Vorteilhaft ist es, dass durch die zumindest eine Sitzeinrichtung und die zumindest eine Polstererweiterung eine Sitzgruppe für mehrere Personen, insbesondere eine Sitzgruppe für zwei bis fünf Personen, ausbildbar ist. Dadurch können andere permanente Sitzeinrichtungen reduziert werden oder ganz entfallen. Dies optimiert den Platzbedarf im Grundriss.

Vorteilhaft ist es, dass durch die zumindest eine Sitzeinrichtung und die zumindest eine Polstererweiterung eine Sitzgruppe gebildet ist, die eine temporäre seitliche Sitzbank umfasst. Dies ermöglicht eine große Anzahl an Sitzmöglichkeiten und gewährleistet gleichzeitig große konstruktive Freiheiten bei der Gestaltung des Grundrisses, insbesondere bei der Positionierung einer Seitentür zum Ein- und Aussteigen.

Je nach Ausgestaltung und Anwendungsfall können ein oder mehrere der folgenden Merkmale und Vorteile realisiert sein.

In vorteilhafter Weise kann ein Umbau von Fahrer- und Beifahrersitz zu einer Couch erfolgen. Hierbei können einzelne drehbare Fahrer- und Beifahrersitze zu einem Tisch gedreht werden.

Bei einer möglichen Ausgestaltung kann ein Umbau von Fahrer- und Beifahrersitz zu einer Couch mit bis zu 3 Sitzplätzen und/oder ein Umbau zu einem Kinder- oder Notbett erfolgen. Es können auch Ausführung zum Nachrüsten bei bei einem Freizeitfahrzeug realisiert werden. Es kann eine Ablage zwischen Fahrer- und Beifahrersitz realisiert werden, die gegebenenfalls auch nachgerüstet werden kann. Es kann ein Mehrwert an Komfort, Flexibilität und verbesserte Blickachsen erreicht werden.

Es ist möglich die Fahrer- und Beifahrersitze mit Drehkonsole zu einer Couch umzubauen und/oder mittels Anbauteilen zu einer gemeinsamen Sitz- und/oder Rückenfläche zu verbinden. Hierdurch können die Fahrer- und Beifahrersitze als Couch und/oder als Zusatz-, Kinder- oder Notbett und/oder als Ablage genutzt werden.

Bei einer Ausführung ist eine Konsole zwischen den Sitzen vorgesehen. Auch eine Drehkonsolen mit Drehbegrenzung kann realisiert sein. Bei einer Ausführung ist eine Konsole sowie ein Kissen oder ein Bezug mit Kissenteil beziehungsweise Kissenteilen realisierbar. Bei einer Ausführung kann ein Aufblasen erfolgen, wobei eine Ausgestaltung als Ein- oder Mehrkammerteil mit oder ohne Abstützung realisiert sein kann.

Durch Verwendung der Fahrer- und Beifahrersitze als Couch sind Grundrisse mit einer Quasi-Rundsitzgruppe möglich, die aus einer L-Sitzgruppe bestehen kann. Hierbei ist ein Umbau der Fahrer- und Beifahrersitze möglich. Durch Verwendung der Fahrer- und Beifahrersitze als Couch sind Grundrisse mit einer Anordnung aus einer ersten Couch und einer zweiten Couch möglich, so dass sich vier Personen gegenübersitzen können. Speziell ist dies bei Verwendung einer Polstererweiterung als Einzelsitzbank möglich.

Bei einer mögliche Ausführung ist eine aufblasbare Ausgestaltung gegeben. Ferner kann die Sitzerweiterung auch als Konsole zwischen den Sitzen ausgeführt sein. Alle Komponenten müssen nicht zwangsläufig aufblasbar sein, sie können auch als Konsolen, Falt-, Näh- oder andere Ausführung ausgeführt sein. Ferner sind beliebige sinnvolle Kombinationen möglich.

Somit sind neue Grundrisse möglich. Es kann ein besserer Sitzkomfort im Stand nach dem Umbau zur Couch erzielt werden. Es kann ein verbessertes Raumgefühl erreicht werden. Eine 5-Personen-Sitzgruppe kann ohne eine feste zusätzliche seitliche Sitzbank an der Beifahrerseite realisiert werden. Eine verbesserte Raumaufteilung sowie neue Positionen der Aufbautüre werden dadurch möglich. Insbesondere kann eine feste seitliche Sitzbank entfallen. Es kann eine verbesserte Blickachse ins Reisemobil und zu einem Bildschirm, insbesondere Fernseher, erzielt werden.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug in einer auszugsweisen, schematischen Darstellung entsprechend einem Ausführungsbeispiel der Erfindung, wobei ein Grundriss in einer möglichen Ausgestaltung dargestellt ist;
- Fig. 2: das in Fig. 1 gezeigte Freizeitfahrzeug, wobei ein Grundriss in einer weiteren möglichen Ausgestaltung dargestellt ist;
- Fig. 3: eine auszugsweise, schematische, räumliche Darstellung einer Anordnung mit einem Fahrersitz und einem Beifahrersitz in einer Aufenthaltsstellung zur Erläuterung der Funktionsweise des Ausführungsbeispiels, wobei ein aufblasbarer Überzug, Kissen und eine Sitzflächenvergrößerung gezeigt sind;
- Fig. 4: eine auszugsweise, schematische, räumliche Darstellung einer Anordnung mit einem Fahrersitz und einem Beifahrersitz in einer Aufenthaltsstellung zur Erläuterung der Funktionsweise des Ausführungsbeispiels, wobei die Sitzflächenvergrößerung gezeigt ist und wobei der in Fig. 3 gezeigte aufblasbarer Überzug und die gezeigten Kissen nicht montiert sind; und
- Fig. 5: eine auszugsweise, schematische, räumliche Darstellung einer Anordnung mit einem Fahrersitz und einem Beifahrersitz in einer Aufenthaltsstellung zur Erläuterung der Funktionsweise des Ausführungsbeispiels, wobei eine weitere Sitzflächenvergrößerung gezeigt ist.

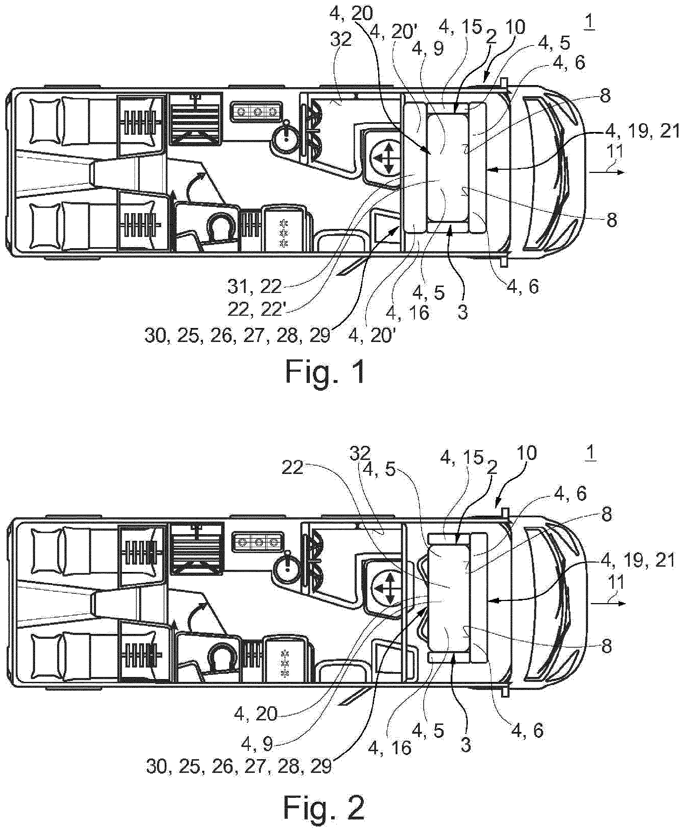

Fig. 1 zeigt ein Freizeitfahrzeug in einer auszugsweisen, schematischen Darstellung entsprechend einem Ausführungsbeispiel der Erfindung. Hierbei ist ein Grundriss in einer möglichen Ausgestaltung dargestellt. Das Freizeitfahrzeug 2 ist vorzugsweise als Wohnmobil ausgebildet. Das Freizeitfahrzeug 1 umfasst Sitzeinrichtungen 2, 3, die im Frontbereich 10 des Freizeitfahrzeugs 1 angeordnet sind. Bei einer Fahrt sind diese in einer Fahrstellung angeordnet, so dass diese in Fahrtrichtung 11 orientiert sind.

Bei einem Aufenthalt, wenn das Freizeitfahrzeug 1 beispielsweise auf einem Campingplatz abgestellt ist, können die Sitzeinrichtungen in einer oder mehreren Aufenthaltsstellungen angeordnet werden. Die Aufenthaltsstellungen unterscheiden sich von der Fahrstellung. In dem dargestellten Grundriss sind die Sitzeinrichtungen 2, 3 in Aufenthaltsstellungen angeordnet, bei denen die Sitzeinrichtungen um 180° entgegen der Fahrtrichtung 11 orientiert sind. Die Sitzeinrichtungen 2, 3 sind jeweils als drehbare Sitzeinrichtung 2, 3 ausgebildet, wobei ausgehend von der Fahrstellung ein Drehen nach innen möglich ist. Hierbei kann eine Arretierung in beliebiger Drehstellung ermöglicht sein. Es kann auch ein Drehen um mehr als 180° möglich sein.

In diesem Ausführungsbeispiel sind mehrere Polstererweiterungen 4 vorgesehen. Polstererweiterungen 4 können so ausgestaltet sein, dass sich diese in die Sitzeinrichtungen 2, 3 einfügen, wenn diese jeweils in der dargestellten Aufenthaltsstellung positioniert sind. Die Polstererweiterungen 4 können auf unterschiedliche Weise ausgebildet sein. Anhand der Fig. 1 bis 5 sind mögliche Ausgestaltungen veranschaulicht.

Fig. 2 zeigt das in Fig. 1 gezeigte Freizeitfahrzeug 1, wobei ein Grundriss in einer weiteren möglichen Ausgestaltung dargestellt ist. Die Sitzeinrichtungen 2, 3 können als Fahrersitz 2 und Beifahrersitz 3 ausgebildet sein.

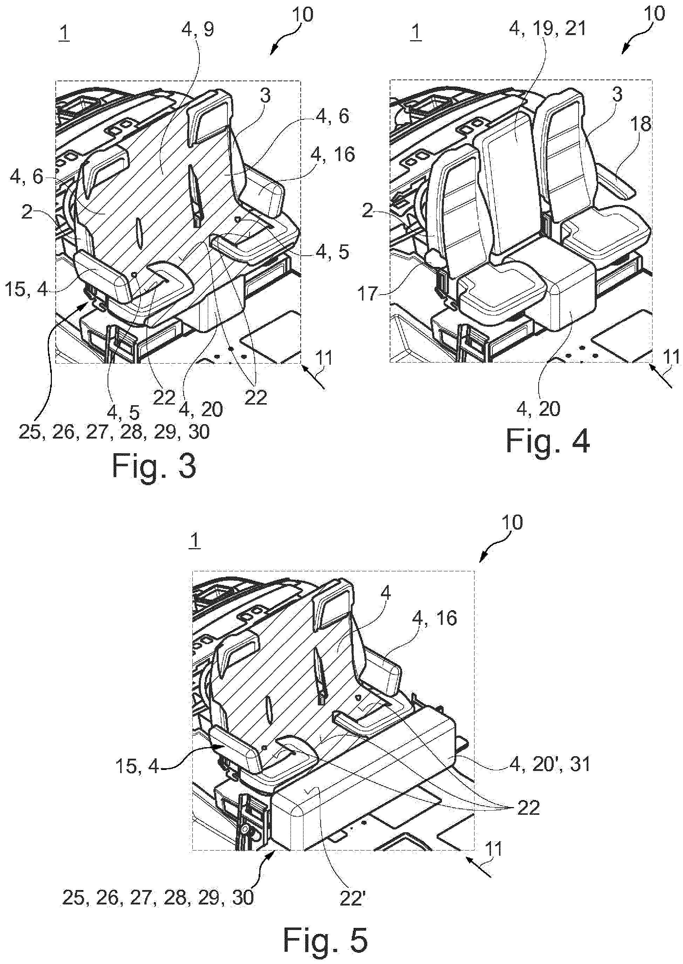

Fig. 3 zeigt eine auszugsweise, schematische, räumliche Darstellung einer Anordnung mit einem Fahrersitz 2 und einem Beifahrersitz 3 in der Aufenthaltsstellung zur Erläuterung der Funktionsweise des Ausführungsbeispiels. Fig. 4 zeigt eine der Fig. 3 entsprechende Anordnung in einer auszugsweise, schematische, räumliche Darstellung zur Erläuterung der Funktionsweise des Ausführungsbeispiels.

Eine Polstererweiterung 4 ist in diesem Ausführungsbeispiel als Sitzflächen- 5 und Lehnenflächenauflage 6 ausgestaltet, die sich in Sitzflächen 7 und Lehnenflächen 8 der Sitzeinrichtungen 2, 3 einfügt, wie es in Fig. 3 gezeigt ist. Zur Verdeutlichung ist in Fig. 4 die Sitzflächen- 5 und Lehnenflächenauflage 6 nicht montiert. Die Polstererweiterung 4 ist in diesem Ausführungsbeispiel hierbei als Überzug 9 ausgestaltet, der teilweise über die Sitzflächen 7 und die Lehnenflächen 8 der Sitzeinrichtung 2, 3 gezogen ist, um die Sitzflächen- 5 und Lehnenflächenauflage 6 zu realisieren.

Weitere Polstererweiterungen 4 sind als Kissen 15, 16 ausgestaltet. Die Kissen 15, 16 sind in Fig. 3 gezeigt und in Fig. 4 nicht montiert. Die Kissen 15, 16 sind auf Lehnen 17, 18 der Sitzeinrichtungen 2, 3 gefügt. Die Kissen 15, 16 sind in diesem Ausführungsbeispiel als seitliches Kissen 15, 16 ausgebildet, die näherungsweise neben den Sitzflächen 7 der Sitzeinrichtungen 2, 3 angeordnet sind.

Außerdem ist in diesem Ausführungsbeispiel eine Polstererweiterung 4 als Sitzflächenvergrößerung 20 ausgebildet. Die Sitzflächenvergrößerung 20 vergrößert die Sitzflächen 7 der Sitzeinrichtungen 2, 3, indem sie zwischen diesen angeordnet ist. Der Sitzflächenvergrößerung 20 zugeordnet ist eine weitere Polstererweiterung 4 als Lehnenvergrößerung 21 ausgebildet. Die Lehnenvergrößerung 21 vergrößert die Lehnenflächen 8 der Sitzeinrichtungen 2, 3, indem sie zwischen diesen angeordnet ist. Die Lehnenvergrößerung 21 ist in diesem Ausführungsbeispiel als Konsole 19 ausgebildet. Somit kann zwischen den Sitzeinrichtungen 2, 3 weiterer Platz zum Sitzen realisiert werden.

Hierbei sind die Sitzfläche 7 der Sitzeinrichtung 2 und die Sitzfläche 7 der zweiten Sitzeinrichtung 3 mit einem gewissen Abstand nebeneinander angeordnet sind, wenn sich diese jeweils in der Aufenthaltsstellung befinden. Zusammen mit der Sitzflächenvergrößerung 20 ergibt sich eine über die Sitzfläche 7 der ersten Sitzeinrichtung 2 und die Sitzfläche 7 der zweiten Sitzeinrichtung 3 erstreckende, zumindest im Wesentlichen ununterbrochene Gesamtfläche 22. Hierbei ist diese Anordnung aus den Sitzflächen 7 der Sitzeinrichtungen 2, 3 und der Sitzflächenvergrößerung 20 in diesem Ausführungsbeispiel noch insgesamt mit dem Überzug 9 überspannt, so dass vorzugsweise keine Zwischenspalte verbleiben.

Fig. 5 zeigt eine auszugsweise, schematische, räumliche Darstellung einer Anordnung mit einem Fahrersitz 2 und einem Beifahrersitz 3 in einer Aufenthaltsstellung zur Erläuterung der Funktionsweise des Ausführungsbeispiels, wobei eine weitere Sitzflächenvergrößerung 20' gezeigt ist. Diese weitere Sitzflächenvergrößerung 20` ist vor der in Fig. 3 veranschaulichten Anordnung zusätzlich angeordnet. Die weitere Sitzflächenvergrößerung 20' vergrößert bei einer möglichen Anordnung die Sitzflächen 7 der Sitzeinrichtungen 2, 3 vor der jeweiligen Sitzfläche 7 und vor der Sitzflächenvergrößerung 20.

Durch mehrere Polstererweiterungen 4 kann in diesem Ausführungsbeispiel die sich ergebende Gesamtfläche 22 für eine Couch 25 genutzt werden, wie es anhand der Fig. 2 bis 4 veranschaulicht ist. Es kann auch eine Nutzung der Gesamtfläche 22' für ein Zusatzbett 26 und/oder ein Kinderbett 27 und/oder ein Notbett 28 erfolgen, wie es in Fig. 1 und 5 veranschaulicht ist. Ferner kann eine Gesamtfläche 22, 22` auch als Ablage 29 genutzt werden. Je nach Anforderungen, insbesondere in Bezug auf die Größe der Gesamtfläche 22, 22' und den Komfort, sind neben diesen bevorzugten Nutzungen auch weitere Nutzungen möglich.

Unter Einbeziehung der Sitzeinrichtungen 2, 3 kann durch die Polstererweiterungen 4 beispielsweise eine Sitzgruppe 30 für zwei bis fünf Personen realisiert werden. Bei einer von der in Fig. 1 gezeigten Anordnung abgewandelten Anordnung kann die Sitzflächenvergrößerung 20' hierfür eine temporäre seitliche Sitzbank 31 bilden, die an eine Seitenwand 32 (Fig. 1 und 2) gestellt wird.

Die Erfindung ist nicht auf die beschriebenen Ausführungsbeispiele beschränkt.

## Patentansprüche

1. Freizeitfahrzeug (1), insbesondere Wohnmobil, mit zumindest einer Sitzeinrichtung (2, 3) im Frontbereich, die in einer Fahrstellung für eine Fahrt des Freizeitfahrzeugs und in zumindest einer von der Fahrstellung verschiedenen Aufenthaltsstellung anordenbar ist,
**dadurch gekennzeichnet,**
**dass** zumindest eine Polstererweiterung (4) vorgesehen ist und dass die Polstererweiterung (4) so ausgestaltet ist, dass diese sich in die zumindest eine Sitzeinrichtung (2, 3) zumindest in der Aufenthaltsstellung einfügt.

2. Freizeitfahrzeug nach Anspruch 1,
**dadurch gekennzeichnet,**
**dass** zumindest eine Polstererweiterung (4) als Sitzflächenauflage (5) und/oder Lehnenflächenauflage (6) ausgestaltet ist, die sich in eine Sitzfläche (7) beziehungsweise eine Lehnenfläche (8) der Sitzeinrichtung (2, 3) einfügt.

3. Freizeitfahrzeug nach Anspruch 1 oder 2,
**dadurch gekennzeichnet,**
**dass** zumindest eine Polstererweiterung (4) zumindest teilweise als Überzug (9) ausgestaltet ist, der zumindest teilweise über einer Sitzfläche (7) und/oder einer Lehnenfläche (8) der Sitzeinrichtung (2, 3) anordenbar ist.

4. Freizeitfahrzeug nach einem der Ansprüche 1 bis 3,
**dadurch gekennzeichnet,**
a) **dass** zumindest eine Polstererweiterung (4) als Kissen (15, 16) ausgestaltet ist, das sich an eine Lehne (17, 18) der Sitzeinrichtung (2, 3) fügt, und/oder
b) **dass** zumindest eine Polstererweiterung (4) als seitliches Kissen (15, 16) ausgebildet ist, das zumindest näherungsweise neben einer Sitzfläche (7) der Sitzeinrichtung (2, 3) vorgesehen ist.

5. Freizeitfahrzeug nach einem der Ansprüche 1 bis 4,
**dadurch gekennzeichnet,**
**dass** zumindest eine Polstererweiterung (4) als Sitzflächenvergrößerung (20) ausgebildet ist, die eine Sitzfläche (7) zumindest einer Sitzeinrichtung (2, 3) vergrößert.

6. Freizeitfahrzeug nach Anspruch 5,
**dadurch gekennzeichnet,**
a) **dass** die Sitzflächenvergrößerung (20) die Sitzfläche (7) der Sitzeinrichtung (2, 3) zumindest neben der Sitzfläche (7) der Sitzeinrichtung (2, 3) vergrößert und/oder
b) **dass** die Sitzflächenvergrößerung (20) die Sitzfläche (7) der Sitzeinrichtung (2, 3) zumindest vor der Sitzfläche (7) der Sitzeinrichtung (2, 3) vergrößert.

7. Freizeitfahrzeug nach einem der Ansprüche 1 bis 6,
**dadurch gekennzeichnet,**
**dass** zumindest eine Polstererweiterung (4) als Lehnenvergrößerung (21) ausgebildet ist, die die Lehnenfläche (8) der Sitzeinrichtung (2, 3) vergrößert.

8. Freizeitfahrzeug nach Anspruch 7,
**dadurch gekennzeichnet,**
**dass** die Lehnenvergrößerung (21) die Lehnenfläche (8) der Sitzeinrichtung (2, 3) neben der Lehnenfläche (8) der Sitzeinrichtung (2, 3) vergrößert.

9. Freizeitfahrzeug nach einem der Ansprüche 1 bis 8,
**dadurch gekennzeichnet,**
**dass** eine erste Sitzeinrichtung (2) im Frontbereich (10), die in einer Fahrstellung für eine Fahrt des Freizeitfahrzeugs und in zumindest einer von der Fahrstellung verschiedenen Aufenthaltsstellung anordenbar ist, und zumindest eine zweite Sitzeinrichtung (3) im Frontbereich (10), die in einer Fahrstellung für eine Fahrt des Freizeitfahrzeugs und in zumindest einer von der Fahrstellung verschiedenen Aufenthaltsstellung anordenbar ist, vorgesehen sind, dass die erste Sitzeinrichtung (2) und die zweite Sitzeinrichtung (3) so in der Aufenthaltsstellung anordenbar sind, dass eine Sitzfläche (7) der ersten Sitzeinrichtung (2) und eine Sitzfläche (7) der zweiten Sitzeinrichtung (3) mit einem gewissen Abstand nebeneinander angeordnet sind, und dass zwischen der Sitzfläche (7) der ersten Sitzeinrichtung (2) und der Sitzfläche (7) der zweiten Sitzeinrichtung (3) zumindest eine Polstererweiterung (4) anordenbar ist, so dass eine sich über die Sitzfläche (7) der ersten Sitzeinrichtung (2) und die Sitzfläche (7) der zweiten Sitzeinrichtung (3) erstreckende, zumindest im Wesentlichen ununterbrochene Gesamtfläche (22) gebildet ist.

10. Freizeitfahrzeug nach Anspruch 9,
**dadurch gekennzeichnet,**
**dass** die zumindest eine Polstererweiterung (4) so ausgestaltet ist, dass die Gesamtfläche für eine Couch (25) und/oder ein Zusatzbett (26) und/oder ein Kinderbett (27) und/oder als Notbett (28) und/oder als Ablage (29) nutzbar ist.

11. Freizeitfahrzeug nach einem der Ansprüche 1 bis 10,
**dadurch gekennzeichnet,**
a) **dass** zumindest eine Sitzeinrichtung (2) als Fahrersitz (2) ausgebildet ist und/oder dass zumindest eine Sitzeinrichtung (3) als beifahrerseitige Sitzeinrichtung (3), insbesondere als Beifahrersitz (3) oder als Beifahrersitzgruppe, ausgebildet ist und/oder
b) **dass** zumindest eine Sitzeinrichtung (2, 3) als drehbare Sitzeinrichtung (2, 3) ausgebildet ist und/oder dass zumindest eine Sitzeinrichtung (2, 3) als um zumindest 180° drehbare Sitzeinrichtung (2, 3) ausgebildet ist.

12. Freizeitfahrzeug nach einem der Ansprüche 1 bis 11,
**dadurch gekennzeichnet,**
a) **dass** zumindest eine Polstererweiterung (4) als zumindest teilweise aufblasbare Polstererweiterung (4) ausgebildet ist und/oder dass zumindest eine Polstererweiterung (4) zumindest eine aufblasbare Kammer aufweist und/oder dass zumindest eine Polstererweiterung (4) zumindest eine aufblasbare Kammer mit Innenzugelementen und/oder Abstützelementen aufweist und/oder
b) **dass** zumindest eine Polstererweiterung (4) als Konsole (19) ausgebildet ist und/oder
c) **dass** zumindest eine Polstererweiterung (4) als faltbare Polstererweiterung (4) ausgebildet ist und/oder
d) **dass** zumindest eine Polstererweiterung (4) als genähte Polstererweiterung (4) ausgebildet ist und/oder
e) **dass** durch die zumindest eine Sitzeinrichtung (2, 3) und die zumindest eine Polstererweiterung (4) eine Sitzgruppe (30) für mehrere Personen, insbesondere eine Sitzgruppe (30) für zwei bis fünf Personen, ausbildbar ist und/oder
f) **dass** durch die zumindest eine Sitzeinrichtung (2, 3) und die zumindest eine Polstererweiterung (4) eine Sitzgruppe (30) gebildet ist, die eine temporäre seitliche Sitzbank (31) umfasst.
